# EUROPÄISCHE PATENTSCHRIFT

(11) **EP 1 032 878 B1**
(45) Veröffentlichungstag und Bekanntmachung des Hinweises auf die Patenterteilung: **13.02.2002**
(21) Anmeldenummer: 98963349.0
(22) Anmeldetag: 12.11.1998
(51) Int. Cl.: G06F 11/14, G06F 1/24

(54) **ÜBERWACHUNGSSYSTEM FÜR DATENVERARBEITUNGSANLAGEN**
MONITORING SYSTEM FOR COMPUTERS
SYSTEME DE SURVEILLANCE POUR INSTALLATIONS INFORMATIQUES

(30) Priorität: 28.11.1997 DE 19752850
(43) Veröffentlichungstag der Anmeldung: 06.09.2000
(73) Patentinhaber: Fujitsu Siemens Computers GmbH, 81739 München (DE)
(72) Erfinder: BRETTHAUER, Thomas, D-86159 Augsburg (DE); MICHEL, Uwe, D-86343 Königsbrunn (DE)
(74) Vertreter: Epping, Wilhelm, Dipl.-Ing.
(86) Internationale Anmeldenummer: DE9803332
(87) Internationale Veröffentlichungsnummer: WO9928823

(56) Entgegenhaltungen:
- EP-A- 0 410 030
- EP-A- 0 535 761
- US-A- 4 635 258
- US-A- 5 557 777

## Beschreibung

Datenverarbeitungsanlagen können zur unmittelbaren Kommunikation mit einem Benutzer eingesetzt werden, wie das bei den üblicherweise verwendeten Personalcomputern der Fall ist. Eine andere Art der Verwendung von Datenverarbeitungsanlagen stellt ihr Einsatz als sogenannter Server dar, bei dem in der Regel nur mittelbar mit einem Benutzer kommuniziert wird. Server stellen anderen Datenverarbeitungsanlagen, Dienstleistungen, Daten oder Peripheriegeräte zur Verfügung. Man unterscheidet sogenannte File-Server und Application-Server. In manchen Netzen gibt es auch Druck-Server und/oder Fax-Server, über den zentral der Ausdruck bzw. Faxversand per Faxmodem abgewickelt wird. Solche als Server verwendeten Datenverarbeitungsanlagen werden häufig in unbewachten Räumen betrieben. Die Datenverarbeitungsanlagen werden über Fernüberwachung kontrolliert.

Um über längere unbewachte Zeiträume ein solches Datenverarbeitungssystem betreiben zu können, hat sich eine Überwachungsroutine, die auch als Watchdog bezeichnet wird, etabliert. Diese Überwachungsroutine läuft in bestimmten Zeitabständen in einer ordnungsgemäß mit Hilfe eines Betriebssystems laufenden Datenverarbeitungsanlage ab. Kann diese, beispielsweise aus DE 195 03 312 A1 bekannte Überwachungsroutine nicht nach dem vorgesehenen Zeitintervall ablaufen, führt dies zwangsläufig zu einem Reset der Datenverarbeitungsanlage. Die Datenverarbeitungsanlage wird dabei in ihren Grundzustand zurückversetzt und neu gebootet. Dabei wird das Betriebssystem neu in die Datenverarbeitungsanlage geladen und eine Fortsetzung des regulären Betriebs ermöglicht.

Liegt jedoch ein Fehler in der Datenverarbeitungsanlage vor, der durch den Bootvorgang nicht beseitigt werden kann, dann wird die Datenverarbeitungsanlage auch nach dem Bootvorgang nicht regulär arbeiten. Dies führt dazu, daß auch die Überwachungsroutine nicht so arbeiten kann, daß sie die Aktionen nicht ausführen kann, die einen abermaligen Rücksetz- und Bootvorgang der Datenverarbeitungsanlage verhindern. Im Extremfall führt dies zu einem ständigen Booten und Zurücksetzen der Datenverarbeitungsanlage.

Damit dieses ständige neue Booten auf unbestimmte Zeit nicht eintreten kann, kann in der Datenverarbeitungsanlage ein nicht flüchtiger Speicher vorgesehen werden, in welchem ein Flag immer dann gesetzt wird, wenn die Überwachungsroutine einen Restart ausgelöst hat. Die beim Bootvorgang verwendeten Systemroutinen überprüfen dann jeweils den Zustand des beispielsweise batteriegepufferten Flags. Ist dieses Flag gesetzt, dann inkrementiert die Systemroutine einen in einem nicht flüchtigen Speicher angeordneten Zähler. Bei Erreichen einer bestimmten Anzahl von Bootvorgängen wird die Überwachungsroutine nicht mehr gestartet und somit kein neuer Boot-vorgang mehr ausgelöst.

Bei dem beispielsweise aus DE 36 44 631 bekannten Überwachungssystem muß also zumindest ein nicht flüchtiger Speicher vorgesehen werden, in dem ein Flag trotz des nicht mehr stabil laufenden Datenverarbeitungssystems gesetzt werden kann. Dazu müssen besondere Funktionseinheiten in die Datenverarbeitungsanlage eingefügt werden, die in üblichen Datenverarbeitungsanlagen nicht vorhanden sind.

Ferner ist aus DE 32 43 750 C3 eine Überwachungsroutine in einer Datenverarbeitungsanlage bekannt, die einen Zähler dazu benutzt, dass die Anlage bei Erreichen eines vorgegebenen Wertes in ihren Grundzustand versetzt wird und dass bei regulärem Betrieb der Anlage der Zähler stets rechtzeitig vor Erreichen seines vorgegebenen Zählwertes zurückgesetzt wird.

Der vorliegenden Erfindung liegt nun die Aufgabe zugrunde, ein Überwachungssystem für Datenverarbeitungsanlagen aufzuzeigen, das die Datenverarbeitungsanlage zuverlässig und ohne zusätzlichen Komponentenaufwand vor ständigen Wiederholungen des Bootvorgangs bei Instabilität der Datenverarbeitungsanlage schützt.

Diese Aufgabe wird durch die im Patentanspruch 1 angegebenen Merkmale gelöst. Gemäß der vorliegenden Erfindung wird in einem ohnehin in der Datenverarbeitungsanlage enthaltenen, nicht flüchtigen Speicher ein Speicherbereich definiert, in den stets bei regulärem Herunterfahren (Reset) der Datenverarbeitungsanlage eine Reset-Information eingetragen wird, wonach das Beenden des Arbeitsvorgangs auf reguläre Weise erfolgte. Als nicht flüchtiger Speicher kann beispielsweise die Festplatte dienen, auf der in einem bestimmten Speicherbereich eine Datei, insbesondere eine Systemdatei (Registry, Config.sys) vorhanden ist. In diese Datei kann die Reset-Information gespeichert werden. Ein Speichern in der Systemdatei hat den Vorteil, daß die Systemdatei bei jedem Bootvorgang ohnehin im Zugriff der Systemroutinen (BIOS) liegt, die den Bootvorgang unter Einschaltung der Überwachungsroutine bewerkstelligen. Es kann jedoch von den Systemroutinen auch auf jede andere Datei zugegriffen werden. Bei jedem Neustart wird überprüft, ob die Reset-Information vorhanden ist, und anschließend wird diese vorhandene Reset-Information gelöscht. Wird allerdings festgestellt, daß die Reset-Information nicht vorhanden ist, dann wird ein Zähler inkrementiert, der sich ebenfalls auf dem nicht flüchtigen Speichermedium befinden kann. Wird ein bestimmter Zählerstand erreicht, wird die Überwachungsroutine nicht mehr aktiviert und somit eine weitere Folge von Bootvorgängen unterbunden.

Das Speichern der Reset-Information beim regulären Herunterfahren der Datenverarbeitungsanlage ermöglicht ein zuverlässiges Erkennen eines irregulären Resets der Datenverarbeitungsanlage. Wenn ein zuverlässiger Speichervorgang von einer Datenverarbeitungsanlage erwartet wird, die sich in einem undefinierten Zustand befindet, dann ist dies nur unter erhöhtem Aufwand möglich.

Gemäß einer Ausgestaltung und Weiterbildung der Erfindung wird bei inaktivem Status (WDS) der Überwachungsroutine (WD), die Datenverarbeitungsanlage in einen Ruhezustand versetzt. Dieses Versetzen in den Ruhezustand erfolgt vorzugsweise dadurch, daß der laufende Bootvorgang der Datenverarbeitungsanlage fortgesetzt wird. Dieser Bootvorgang mündet jedoch bei deaktivierter Überwachungsroutine unmittelbar in einen Neustart der Datenverarbeitungsanlage. Diese wird auf Grund der vorliegenden Statusinformationen dann in einen Ruhezustand versetzt. Es können auch Vorkehrungen getroffen sein, die eine Fortsetzung des Bootvorgangs unmittelbar unterbinden und einen sofortigen Übergang der Datenverarbeitungsanlage in den Ruhezustand bewirken.

Gemäß einer Ausgestaltung und Weiterbildung der Erfindung wird bei inaktivem Status (WDS) der Überwachungsroutine, der Zähler deaktiviert, so daß ein Zählen vom Anfangswert zum Endwert nicht erfolgen kann. Dies bewirkt, daß die Überwachungsroutine keinen weiteren Bootvorgang mehr auslöst. Der aktuelle Bootvorgang wird fortgesetzt und gegebenenfalls beendet, soweit es der Zustand der Datenverarbeitungsanlage zuläßt. Erst Maßnahmen, die durch einen Systemadministrator eingeleitet werden, können die Datenverarbeitungsanlage wieder in einen Zustand mit Normalbetrieb und aktivierter Überwachungsroutine versetzen. Ein ständig sich wiederholender Bootvorgang wird auch bei dieser Ausgestaltung der Erfindung wirksam verhindert.

Gemäß einer Ausgestaltung und Weiterbildung der Erfindung wird bei einem bestimmten Zählerstand, der kleiner oder gleich dem Zählerstand ist, bei dem die Überwachungsroutine nicht mehr gestartet wird, über eine Ausführungsroutine ein Meldesystem beauftragt, eine Nachricht an einen Systemadministrator zu senden. Damit wird sichergestellt, daß rechtzeitig Gegenmaßnahmen zum Erreichen der Wiederherstellung der Funktionsfähigkeit der Datenverarbeitungsanlage eingeleitet werden können.

Gemäß einer weiteren Weiterbildung und Ausgestaltung der Erfindung wird neben der Information, daß von der Überwachungsroutine ein Neustart ausgelöst wurde, auch der Zeitpunkt gespeichert, zu dem dieser Bootvorgang stattfindet. Dieser gespeicherte Zeitpunkt wird mit einem aktuellen Zeitpunkt eines gerade laufenden Bootvorgangs verglichen. Nur wenn die Differenz dieser Zeitpunkte ein bestimmtes Zeitlimit unterschreitet, wird der Wiederholungszähler inkrementiert. Andernfalls wird der Wiederholungszähler zurückgesetzt. Damit wird wirksam verhindert, daß über lange Zeit unbewacht laufende Datenverarbeitungsanlagen, die in längeren Zeitintervallen durch die Überwachungsroutine immer wieder neu gebootet werden, irrtümlich außer Betrieb gesetzt werden.

Im Folgenden wird die Erfindung anhand der Zeichnung näher erläutert. Dabei zeigen
- Figur 1: eine schematische Blockdarstellung des Überwachungssystems und
- Figur 2: ein Ablaufdiagramm des Überwachungssystems gemäß Figur 1.

Ein Überwachungssystem einer Datenverarbeitungsanlage enthält eine Überwachungsroutine WD, eine Ausführungsroutine TR, einen Zähler CT, ein Meldesystem AL und eine Systemdatei RE. Das Überwachungssystem arbeitet in einer Datenverarbeitungsanlage, die unbewacht in einem Raum ihren Dienst tut. Die Datenverarbeitungsanlage ist als File- oder Application-Server eingesetzt. Da auf diesen Server, der Bestandteil eines Netzwerks von Datenverarbeitungsanlagen ist, ständig Zugriffe aus anderen Datenverarbeitungsanlagen erfolgen, muß dieser Server stets betriebsbereit sein. Um dies zu gewährleisten, wird das Überwachungssystem eingesetzt.

Das Überwachungssystem enthält einen Zeitzähler CT, der von einem Anfangswert zu einem Endwert innerhalb eines Zeitintervalls zählt. Bei Erreichen des Endwertes des Zählers CT wird automatisch ein sogenannter Hardware-Reset der Datenverarbeitungsanlage ausgelöst. Die Länge des Zeitintervalls beträgt beispielsweise 20 Sekunden. Um einen bereits nach 20 Sekunden eingeleiteten Bootvorgang der Datenverarbeitungsanlage zu verhindern, ist die Überwachungsroutine vorgesehen. Die Überwachungsroutine kann nur bei stabil laufender Datenverarbeitungsanlage ordnungsgemäß arbeiten. Die Überwachungsroutine hat die Aufgabe, den Zähler CT rechtzeitig vor Erreichen seines Endwertes auf seinen Anfangswert zurückzusetzen. Diese Aufgabe erfüllt die Überwachungsroutine WD, indem sie die Ausführungsroutine TR stets rechtzeitig, bevor der Zähler CT seinen Endwert erreicht, dazu auffordert, den Zähler CT auf seinen Anfangswert zurückzusetzen.

Mit Hilfe der Ausführungsroutine TR ist die Überwachungsroutine WD in der Lage, Daten aus der Systemdatei RE, die an einem bestimmten Ort auf der Festplatte der Datenverarbeitungsanlage hinterlegt ist, gegen aktuelle Daten auszutauschen. Darüber hinaus ist die Überwachungsroutine WD mit Hilfe der Ausführungsroutine TR in der Lage, das Meldesystem AL anzusprechen. Mit Hilfe des Meldesystems AL können Informationen an Systemadministratoren, die sich entweder vor Ort an der Datenverarbeitungsanlage oder an einer anderen Datenverarbeitungsanlage des Netzwerks befinden oder mit dieser über Telekommunikationsmittel Kontakt aufnehmen können, erreicht werden.

Bei regulärem Betrieb der Datenverarbeitungsanlage ist die Überwachungsroutine WD aktiv. Bei aktiver Überwachungsroutine WD wird stets die Ausführungsroutine TR im erforderlichen Zeitintervall angewiesen, den Zähler CT auf seinen Anfangswert zurückzusetzen. Die Datenverarbeitungsanlage kann so "unterbrechungsfrei" arbeiten. Die Datenverarbeitungsanlage kann jederzeit durch einen Administrator oder ähnlichen Benutzer abgeschaltet und damit in einen Ruhezustand, in dem sie nicht betriebsbereit ist, versetzt werden. Bei einem solchen regulären Abschaltvorgang weist die Überwachungsroutine WD die Ausführungsroutine TR an, einen Eintrag in der Systemdatei RE vorzunehmen, der später so interpretiert werden kann, daß der letzte Abschaltvorgang regulär, also nicht durch das Überwachungssystem ausgelöst wurde. Dieser Eintrag wird im Folgenden als Success-Flag SF bezeichnet. Ein gesetztes Success-Flag SF weist auf einen regulären Abschaltvorgang hin.

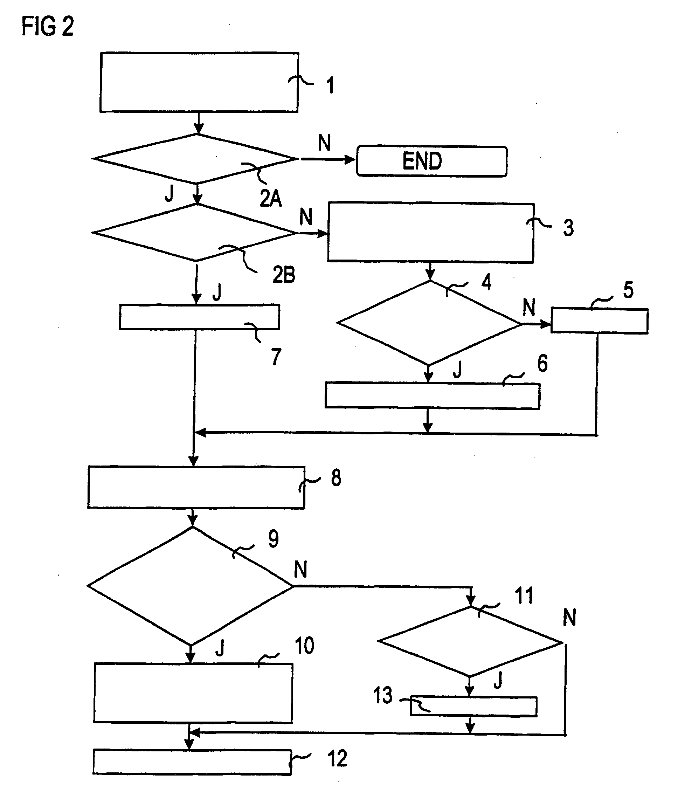

Beim Inbetriebnehmen und beim Neustart der Datenverarbeitungsanlage unternimmt das Überwachungssystem die nachfolgend im Zusammenhang mit Figur 2 beschriebenen Schritte: In einem ersten Schritt 1 werden der Status WDS der Überwachungsroutine WD, der Zählerstand eines in der Systemdatei RE enthaltenen Wiederholungszählers RC und das Success-Flag SF gelesen. Anschließend werden zwei Entscheidungen 2A, 2B getroffen. In der Entscheidung 2A wird der Status WDS der Überwachungsroutine WD überprüft. Ist dieser Status WDS auf inaktiv gesetzt, dann wird der Bootvorgang abgebrochen und die Datenverarbeitungsanlage wird in den Ruhezustand END versetzt. Ist dagegen der Status WDS der Überwachungsroutine WD auf aktiv gesetzt, wird zur Entscheidung 2B übergegangen. Bei dieser Entscheidung 2B wird überprüft, ob das Success-Flag SF gesetzt ist. Ist dies der Fall, dann wird in einem Schritt 7 der Zählerstand des Wiederholungszählers RC auf seinen Anfangswert zurückgesetzt. Nach dem Zurücksetzen in Schritt 7 wird zu Schritt 8, der unten beschrieben wird, weiter verzweigt.

Wird bei der Entscheidung 2B festgestellt, daß das Success-Flag SF nicht gesetzt war, dann wird in einen Schritt 3 verzweigt. In diesem Schritt 3 wird aus der Systemdatei RE die letzte Startzeit LT gelesen. Die letzte Startzeit LT ist diejenige Zeit, die bei einem dem aktuellen Startvorgang der Datenverarbeitungsanlage vorhergehenden Startvorgang in der Systemdatei RE gespeichert wurde. Im Schritt 3 wird weiterhin die aktuelle Startzeit, beispielsweise aus einem Zeitmodul (nicht dargestellt) der Datenverarbeitungsanlage gelesen und die Differenz der aktuellen Startzeit und der letzten Startzeit LT gebildet. Des Weiteren wird aus der Systemdatei RE eine zulässige Differenzzeit DT zwischen aktueller Startzeit und letzter Startzeit LT gelesen. In einem nachfolgenden Schritt 4 wird die aktuelle ermittelte Differenzzeit mit der zulässigen Differenzzeit DT verglichen. Ist die zulässige Differenzzeit DT kleiner als die aktuelle Differenzzeit, dann wird in einem Schritt 5 der aktuelle Stand des Wiederholungszählers RC auf seinen Anfangswert gesetzt. Ist dagegen die aktuelle Differenzzeit kleiner als die zulässige Differenzzeit DT, dann wird der Wert des Wiederholungszählers RC in einem Schritt 6 um eins erhöht.

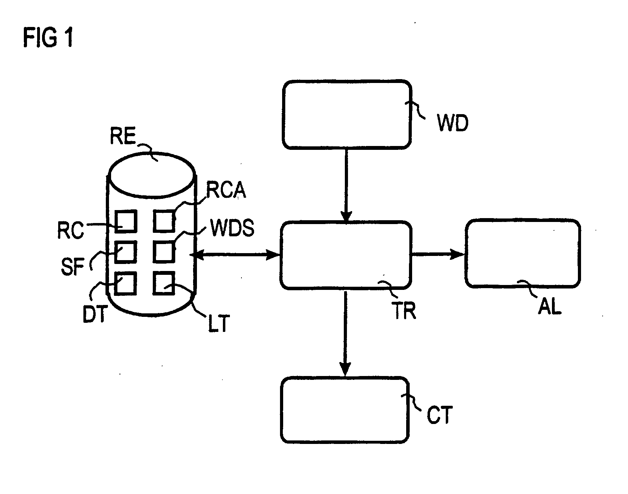

Den Schritten 5, 6 und 7 folgt ein Schritt 8. Im Schritt 8 wird die aktuelle Startzeit als letzte Startzeit LT in die Systemdatei DT geschrieben. Des Weiteren wird aus der Systemdatei DT der Wert RCA für die Obergrenze der Anzahl von zulässigen Neustarts des Datenverarbeitungssystems gelesen. Mit einer Entscheidung 9 wird festgestellt, ob der Wert für die Obergrenze RCA des Wiederholungszählers RC schon gleich oder größer dem aktuellen Stand des Wiederholungszählers RC ist. Ist dies nicht der Fall, dann wird in einem Schritt 11 geprüft, ob ein anderer beispielsweise um eins geringerer Wert als die Obergrenze RCA für den Wiederholungszähler RC bereits erreicht ist. Ist dies der Fall, wird in einem nachfolgenden Schritt 13 über das Meldesystem AL (Figur 1) der Systemadministrator über den Zustand der Datenverarbeitungsanlage informiert. Dieser kann dann geeignete Maßnahmen zur Wiederherstellung der Stabilität der Datenverarbeitungsanlage rechtzeitig einleiten. Ist der Zwischenstand des Wiederholungszählers RC im Schritt 11 noch nicht erreicht oder soll keine Meldung an den Systemadministrator erfolgen, dann wird unmittelbar zum Schritt 12 verzweigt. Mit diesem Schritt 12 wird der Bootvorgang der Datenverarbeitungsanlage fortgesetzt.

Wurde jedoch im Schritt 9 die Obergrenze RCA des Wiederholungszählers RC erreicht oder überschritten, dann wird in einem Schritt 10 der Status der Überwachungsroutine WDS in der Systemdatei RE deaktiviert und der Wiederholungszähler RC auf seinen Anfangswert zurückgesetzt. Nachfolgend wird mit dem Schritt 12 der Bootvorgang der Datenverarbeitungsanlage fortgesetzt. Dieser Bootvorgang mündet jedoch bei deaktivierter Überwachungsroutine WD aber aktivem Zähler CT unmittelbar in einen Neustart der Datenverarbeitungsanlage. Diese wird auf Grund der vorliegenden Statusinformationen in einen Ruhezustand END versetzt.

Obwohl die vorliegende Erfindung anhand eines Beispiels in spezieller Form erläutert wurde, wird sie dadurch nicht eingeschränkt. Ähnliche Lösungen, die andere Ausführungsformen zur Folge haben, können vom Fachmann gefunden werden, ohne daß sie außerhalb des Schutzbereichs der vorliegenden Erfindung, welcher durch den unabhängigen Anspruch definiert wird, liegen.

## Patentansprüche

1. Überwachungssystem für Datenverarbeitungsanlagen mit
- einem nicht flüchtigen, in üblichen Datenverarbeitungsanlagen vorhandenen Speicher, der eine Datei (RE), insbesondere eine Systemdatei (RE) enthält,
- einem Zähler (CT), der in einem definierten Zeitintervall von einem Anfangswert zu einem Endwert zählt und bei Erreichen des Endwertes die Datenverarbeitungsanlage in ihren Grundzustand versetzt,
- einer Überwachungsroutine (WD), die
- bei regulärem Betrieb der Datenverarbeitungsanlage und in einem aktiven Status (WDS) den Zähler (CT) stets rechtzeitig vor Erreichen des Endwerts auf den Anfangswert zurücksetzt, und
- nur bei nicht durch den Zähler (CT) ausgelöstem, regulären Herunterfahren des Datenverarbeitungssystems in seinen Grundzustand eine Reset-Information (SF) in die Datei (RE) des nicht flüchtigen Speichers einträgt,
- beim Bootvorgang das Vorliegen der Reset-Information (SF) überprüft und diese löscht und bei Nichtvorliegen dieser Reset-Information (SF) einen in der Datei (RE) des nicht flüchtigen Speichers vorgesehenen Wiederholungszähler (RC) inkrementiert,
- bei Erreichen eines definierten Zählerstandes des Wiederholungszählers (RC) in einen inaktiven Status (WDS) versetzt wird, so daß das Überwachungssystem eine weitere Folge von Bootvorgängen unterbindet.

2. Überwachungssystem nach Anspruch 1, wobei bei inaktivem Status (WDS) der Überwachungsroutine (WD) die Datenverarbeitungsanlage in einen Ruhezustand versetzt wird.

3. Überwachungssystem nach Anspruch 1, wobei bei inaktivem Status (WDS) der Überwachungsroutine (WD) der Zähler (CT) deaktiviert wird, so daß ein Zählen vom Anfangswert zum Endwert nicht erfolgen kann.

4. Überwachungssystem nach einem der Ansprüche 1 bis 3, bei dem vor oder bei Erreichen des definierten Zählerstandes des Wiederholungszählers (RC) mittels einer Ausführungsroutine (TR) ein Meldesystem (AL) beauftragt wird, eine Nachricht an einen Systemadministrator zu senden.

5. Überwachungssystem nach einem der Ansprüche 1 bis 4 bei dem,
- der Zeitpunkt (LT) in die Datei (RE) des nicht flüchtigen Speichers gespeichert wird, zu dem ein Bootvorgang stattfindet,
- der gespeicherte Zeitpunkt (LT) mit einem aktuellen Zeitpunkt eines gerade laufenden Bootvorgangs verglichen wird und nur wenn die Differenz dieser Zeitpunkte eine zulässige Differenzzeit (DT) unterschreitet, der Wiederholungszähler (RC) inkrementiert wird und andernfalls der Wiederholungszähler (RC) zu seinem Anfangswert zurückgesetzt wird.

6. Server mit einem Überwachungssystem nach einem der Ansprüche 1 bis 5.

## Claims

1. Monitoring system for data processing installations, having
- a non-volatile memory which is present in ordinary data processing installations and contains a file (RE), in particular a system file (RE),
- a counter (CT) which counts from an initial value to a final value in a defined time interval and, upon reaching the final value, puts the data processing installation into its basic state,
- a monitoring routine (WD) which
- during normal operation of the data processing installation and in an active status (WDS), always resets the counter (CT) to the initial value in good time before the final value is reached, and
- only when the data processing system is reset to its basic state in normal fashion, not triggered by the counter (CT), enters a reset information item (SF) into the file (RE) in the non-volatile memory,
- during the boot operation, checks the presence of the reset information item (SF) and erases it and, if this reset information item (SF) is not present, increments a repetition counter (RC) provided in the file (RE) in the non-volatile memory,
- is put into an inactive status (WDS) when a defined count of the repetition counter (RC) is reached, so that the monitoring system prevents a further succession of boot operations.

2. Monitoring system according to Claim 1, where, if the status (WDS) of the monitoring routine (WD) is inactive, the data processing installation is put into a quiescent state.

3. Monitoring system according to Claim 1, where, if the status (WDS) of the monitoring routine (WD) is inactive, the counter (CT) is deactivated, so that counting from the initial value to the final value is not possible.

4. Monitoring system according to one of Claims 1 to 3, in which, before or when the defined count of the repetition counter (RC) is reached, an execution routine (TR) is used to instruct a reporting system (AL) to send a message to a system administrator.

5. Monitoring system according to one of Claims 1 to 4, in which
- the time (LT) at which a boot operation takes place is stored in the file (RE) in the non-volatile memory,
- the stored time (LT) is compared with a current time for a boot operation which is currently in progress, and only if the difference between these times is below a permissible difference time (DT) is the repetition counter (RC) incremented, and otherwise the repetition counter (RC) is reset to its initial value.

6. Server having a monitoring system according to one of Claims 1 to 5.

## Revendications

1. Système de surveillance pour installations informatiques, comportant :
- une mémoire non volatile qui est présente dans des installations informatiques usuelles et qui contient un fichier (RE), notamment un fichier système (RE),
- un compteur (CT) qui compte à des intervalles de temps définis d'une valeur initiale à une valeur finale et qui met l'installation informatique dans son état de base lorsque la valeur finale est atteinte,
- une routine de surveillance (WD), qui
- lors du fonctionnement normal de l'installation informatique et pour un état actif (WDS), met le compteur (CT) toujours à temps, avant que la valeur finale ne soit atteinte, à la valeur initiale, et
- seulement lorsque l'installation informatique est remise à l'état de base normalement c'est-à-dire sans déclenchement par le compteur (CT), enregistre une information de remise à l'état initial (SF) dans le fichier (RE) de la mémoire non volatile,
- lors de l'opération de démarrage, contrôle la présence de l'information de remise à l'état initial (SF) et efface celle-ci et, en l'absence de cette information de remise à l'état initial (SF), incrémente un compteur de répétition (RC) prévu dans le fichier (RE) de la mémoire non volatile,
- lorsqu'un état défini du compteur de répétition (RC) est atteint, passe dans un état inactif (WDS) de telle sorte que le système de surveillance bloque une autre succession d'opérations de démarrage.

2. Système de surveillance selon la revendication 1, dans lequel, lorsque la routine de surveillance (WD) est à l'état inactif (WDS), l'installation informatique est placée dans un état de repos.

3. Système de surveillance selon la revendication 1, dans lequel, lorsque la routine de surveillance (WD) est à l'état inactif (WDS), le compteur (CT) est désactivé de telle sorte qu'un comptage de la valeur initiale à la valeur finale ne peut pas s'effectuer.

4. Système de surveillance selon l'une des revendications 1 à 3, dans lequel, avant que l'état défini du compteur de répétition (RC) soit atteint ou lorsqu'il est atteint, un système de signalisation (AL) est chargé au moyen d'une routine d'exécution (TR) d'envoyer un message à un administrateur de système.

5. Système de surveillance selon l'une des revendications 1 à 4, dans lequel
- l'instant (LT) auquel une opération de démarrage a lieu est mémorisé dans le fichier (RE) de la mémoire non volatile,
- l'instant mémorisé (LT) est comparé avec un instant actuel d'une opération de démarrage justement en cours et, seulement si la différence de ces instants est inférieure à une différence de temps autorisée (DT), le compteur de répétition (RC) est incrémenté et, sinon, le compteur de répétition (RC) est remis à sa valeur initiale.

6. Serveur comportant un système de surveillance selon l'une des revendications 1 à 5.
